(19) Europäisches Patentamt
European Patent Office
Office européen des brevets

(11) Veröffentlichungsnummer : **0 091 883**
**B1**

(12) **EUROPÄISCHE PATENTSCHRIFT**

(45) Veröffentlichungstag der Patentschrift : **22.01.86**

(51) Int. Cl.⁴ : **C 08 G 59/68**, C 08 G 59/18

(21) Anmeldenummer : **83810131.9**

(22) Anmeldetag : **30.03.83**

# (54) Vorverlängerungskatalysatoren für Epoxidharze.

(30) Priorität : **05.04.82 US 365729**

(43) Veröffentlichungstag der Anmeldung : **19.10.83 Patentblatt 83/42**

(45) Bekanntmachung des Hinweises auf die Patenterteilung : **22.01.86 Patentblatt 86/04**

(84) Benannte Vertragsstaaten : **BE CH DE FR GB IT LI NL SE**

(56) Entgegenhaltungen :
**DE-A- 2 312 409**
**DE-A- 2 505 345**

(73) Patentinhaber : **CIBA-GEIGY AG**
**Klybeckstrasse 141**
**CH-4002 Basel (CH)**

(72) Erfinder : **Gannon, John A.**
**7 Elmcrest Drive**
**Danbury Connecticut 06810 (US)**

**EP 0 091 883 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Vorliegende Erfindung betrifft latente Katalysatoren mit hoher Selektivität und Reaktionsfähigkeit bei der Vorverlängerung flüssiger Epoxidharze zu hochmolekularen, weitgehend unverzweigten, bei Raumtemperatur festen Epoxidharzen.

Das vorliegende Verfahren besteht darin, dass man ein flüssiges, mehr als eine und vorzugsweise zwei Epoxidgruppen enthaltendes Epoxidharz und ein mindestens zwei Hydroxylgruppen enthaltendes Phenol in Gegenwart eines Katalysators miteinander umsetzt. Die Reaktion ist ein Polymerisationsverfahren mit stufenweisem Wachstum und wird als ein Verschmelzungs- oder Vorverlängerungsverfahren bezeichnet.

Eine für Vorverlängerungsverfahren bedeutsame Eigenschaft des Katalysators ist seine Selektivität in der Phenolyhydroxyl/Epoxidreaktion. Die hochselektive Katalyse stellt die Erzeugung von linearen Polyhydroxyäthern sicher, was sehr erwünscht ist. Bei schlechter Selektivität kann die bei der Oeffnung des Oxiranrings entstehende aliphatische Hydroxylgruppe mit einer Epoxidgruppe reagieren :

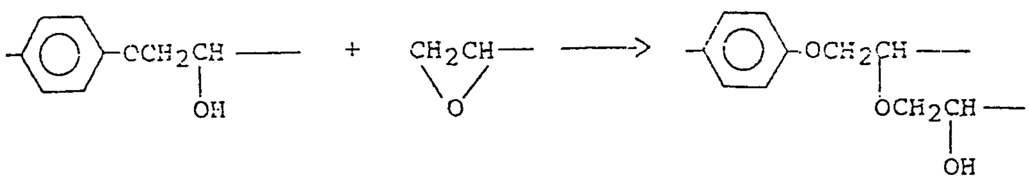

Das im letzteren Fall erhaltene Polymer ist verzweigt oder vernetzt und besitzt eine beschränkte Kettenbiegsamkeit.

Gleichzeitig mit der obenerwähnten Selektivität sollen Vorverlängerungskatalysatoren genügend reaktionsfähig sein, um die Bildung « linearer » fester vorverlängerter hochmolekularer Epoxidharze mit wirtschaftlich güngstiger Geschwindigkeit zu ermöglichen. Hohe Reaktionsgeschwindigkeiten sind dabei wegen der Oeffnung des Epoxidrings von starker Wärmeentwicklung begleitet, und die freigesetzte Wärme führt dazu, dass rasch ein höhermolekulares Produkt erhalten wird.

Viele Verbindungen wurden als Katalysatoren für die Vorverlängerung flüssiger Epoxidharze vorgeschlagen oder beschrieben. Zum Teil sind diese jedoch nicht selektiv und verursachen die obenerwähnte Verzweigung oder Vernetzung. Andere wiederum sind unwirksam in Förderung der stark exothermen Vorverlängerungsreaktionen zur Erzeugung eines befriedigend vorverlängerten linearen festen Epoxidharzes mit praktisch brauchbarer Geschwindigkeit.

Phosphoniumhalogenidkatalysatoren wie Methyl- oder Aethyltriphenylphosphoniumjodid oder -bromid sind in US-A-3 447 990 und 3 547 885 beschrieben.

Organische Phosphinkatalysatoren wie Triphenylphosphin oder Tributylphosphin sind in US-A-3 547 881 offenbart.

US-A-3 948 855 beschreibt Phosphoniumsalze von Carbonsäuren, wie Aethyltriphenylphosphoniumacetat oder dessen Essigsäurekomplex, sowie Phosphoniumphosphatester.

Phosphorhaltige Katalysatoren, welche die Reaktionsprodukte von Trihydrocarbylphosphinen mit Maleinsäureanhydrid und deren hydrolysierte Derivate darstellen, sind in US-A-4 048 141 und 4 131 633 offenbart.

US-A-4 132 706 beschreibt trisubstituierte innere Salze des (2,5-Dihydroxyphenyl)-phosphoniumhydroxyds als Katalysatoren.

In GB-A-1 398 197 sind Alkylenphosphorane der allgemeinen Formel

$$R'_3P = CR''R''',$$

worin die durch R' dargestellten Gruppen gleich oder verschieden sein können und je für eine aromatische Kohlenwasserstoffgruppe, vorzugsweise Phenyl, stehen sowie R'' und R''' ein Wasserstoffatom, eine Carbonylgruppe, einen Carbonsäureester, ein Carbonsäureamid oder eine gegebenenfalls durch unter Carbonylgruppen, Carbonsäureestergruppen und Carbonsäureamidgruppen ausgewählte Gruppen einfach oder mehrfach substituierte Kohlenwasserstoffgruppe mit bis zu 20 Kohlenstoffatomen bedeuten und/oder gegebenenfalls einen Ring bilden, beschrieben. Diese Katalysatoren sind nach der Offenbarung selektiver als zuvor vorgeschlagene Katalysatoren wie Alkali oder Substanzen mit alkalischen Eigenschaften, d. h. Amine, quartäre Ammoniumverbindungen oder Salze wie Natriumacetat. Ferner sollen die Phosphorane zur Förderung annehmbarer Reaktionsgeschwindigkeiten wirksamer als die oben genannte Gruppe der Katalysatoren sein.

Die Verwendung ähnlicher phosphorhaltiger Verbindungen wie den Alkylenphosphoranen und Phosphoniumhalogeniden als Katalysatoren in den sogenannten « Taffy »-Verfahren zur Herstellung höhermolekularer fester Harze direkt aus Polyphenolen und Epichlorhydrin mit Aetzalkali ist auch in DE-A-2 643 336 (= CA, *87*, 54629b (1977) und in GB-A-1 485 345 beschrieben.

Gegenstand vorliegender Erfindung ist nun eine vorkatalysierte Epoxidharzzusammensetzung,

welche aus (a) einem flüssigen Epoxidharz mit durchschnittlich mehr als einer vicinalen Epoxidgruppe pro Molekül und (b) 0,005 bis 1 Gew.%, bezogen auf das Gesamtgewicht der Reaktions partner, von Formylmethylentriphenylphosphoran oder einem Formylmethyltriphenylphosphoniumhalogenid, vorzugswseise dem Chlorid, besteht.

Gegenstand der Erfindung ist ferner eine vorkatalysierte Epoxidharzzusammensetzung, welche zusätzlich (c) ein Bisphenol enthält, wobei (b) in ausreichender Menge vorliegt, um die Vorverlängerungsreaktion zwischen (a) und (c) zu katalysieren, wenn das Reaktionsgemisch auf eine Temperatur von 50 °C bis 225 °C erhitzt wird.

Vorzugsweise liegt als Epoxidharz (a) der Diglycidyläther von Bisphenol A, nämlich 2,2-Bis-[p-(glycidyloxy)-phenyl]-propan, und als Bisphenol das Bisphenol A, nämlich 4,4'-Isopropylidendiphenol, vor.

Gegenstand vorliegender Erfindung ist weiterhin ein verbessertes Verfahren zur Vorverlängerung eines flüssigen Epoxidharzes mit mindestens einer, und vorzugsweise zwei, vicinalen Epoxidgruppen mittels eines Polyphenols, vorzugsweise eines Bisphenols, unter Bildung eines festen, im wesentlichen linearen Harzes bei etwa 50 °C bis etwa 225 °C, wobei die Verbesserung darin besteht, dass die Vorverlängerungsreaktion in Gegenwart von 0,005 bis 1 Gew.% bezogen auf das Gesamtgewicht der Reaktionspartner Formylmethylentriphenylphosphoran oder einem Formylmethyltriphenylphosphoniumhalogenid, vorzugsweise dem Chlorid, erfolgt.

Während zahlreiche mögliche Vorverlängerungskatalysatoren sich nicht bewährt haben, weisen einige ausgewählte Verbindungen wie Aethyltriphenylphosphoniumjodid US-A-3 477 990 und 3 547 855) und der Aethyltriphenylphosphoniumacetat/Essigsäurekomplex (US-A-3 948 855) genügend Selektivität und Reaktionsfähigkeit auf, um als Vorverlängerungskatalysatoren in flüssigen Epoxidharzen bei gewissen handelsüblichen Epoxidharzsystemen zu dienen.

Die vorliegenden Katalysatoren Formylmethylentriphenylphosphoran und Formylmethyltriphenylphosphoniumhalogenide, z. B. das Chlorid, Jodid oder Bromid, vorzugsweise das Chlorid, führen zu ausgezeichneter Selektivität und Reaktionsfähigkeit der Vorverlängerungsreaktionen.

Ferner zeichnen sich die vorliegenden Katalysatoren gegenüber den beiden obenerwähnten Katalysatoren durch mehrere wichtige Merkmale aus. Sie verleihen vorkatalysierten flüssigen Harzzusammensetzungen bessere Lagerfähigkeit als der Aethyltriphenylphosphoniumacetat/Essigsäurekomplexkatalysator.

Ueberraschenderweise sind die vorliegenden Katalysatoren gegen Hitzeentaktivierung weniger empfindlich als die Aethyltriphenylphosphoniumjodid- und Aethyltriphenylphosphoniumacetat/Essigsäurekomplexkatalysatoren. Diese Beständigkeit gegen Entaktivierung gestattet die Anwendung der vorliegenden Katalysatoren bei höheren Temperaturen in Epoxidharzvorverlängerungsreaktionen, mit den begleitenden wirtschaftlichen Vorteilen, dass man zufriedenstellende vorverlängerte Harze in merklich kürzeren Reaktionszeiten erhält.

Die vorliegenden Katalysatoren weisen einen unerwartet überlegenen Ausgleich der Eigenschaften auf, nämlich ausgezeichnete Selektivität und Reaktionsfähigkeit bei der Vorverlängerungsreaktion zusammen mit guter Lagerfähigkeit der vorkatalysierten Harzzusammensetungen und guter Löslichkeit in einem niedrig siedenden Lösungsmittel bei der Herstellung von vorkatalysierten Epoxidharzzusammensetzungen zur Erzeugung von ausgehärteten Epoxidharzüberzügen mit überlegenen Eigenschaften.

Die unter Verwendung der vorliegenden Katalysatoren hergestellten Harze weisen gute Farbwerte (Gardner-Farbzahlen $< 3$) und hohe Klarheit auf, wie es sich an 40 %igen Harzlösungen in Butylcarbitol zeigt.

Die vorverlängerten hochmolekularen Produkte werden zusammen mit Härtern zur Herstellung von Oberflächenbeschichtungen ausgezeichneter Qualität, d. h. mit verbesserter Haftung, Biegsamkeit und chemischer Beständigkeit gegen Lösungsmittel, Säuren und Alkalien, verwendet.

Die vorverlängerten Produkte niedrigeren Molekulargewichts werden beim Laminieren, in Wickelverfahren und Konstruktionsanwendungen eingesetzt, insbesondere wenn sie sich von bromierten Phenolen ableiten.

Die Polyepoxide sind solche, die mehr als eine viz.-Epoxigruppe, d. h. mehr als eine

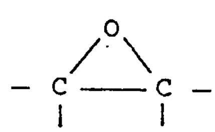

Gruppe aufweisen, welche endständig, d. h.

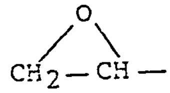

oder mittelständig sein kann.

Dabei kommen gesättigte oder ungesättigte aliphatische, cycloaliphatische, aromatische oder

heterocyclische sowie gegebenenfalls durch Substituenten wie Chlor, Hydroxylgruppen, Aetherreste und dergleichen substituierte Polyepoxide in Frage.

Beispiele für solche Polyepoxide sind unter anderem 1,4-Bis-(2,3-epoxipropoxy)-benzol, 1,3-Bis-(2,3-epoxipropoxy)-benzol, 4,4'-Bis-(2,3-epoxipropoxy)-diphenyläther, 1,8-Bis-(2,3-epoxipropoxy)-octan, 1,4-Bis-(2,3-epoxipropoxy)-cyclohexan, 2,2-[4,4'-Bis-(2-hydroxy-3,4-epoxibutoxy)-diphenyl]-propan, 1,3-Bis-(4,5-epoxipentoxy)-5-chlorbenzol, 1,4-Bis-(3,4-epoxibutoxy)-2-chlorcyclohexan, 1,3-Bis-(2-hydroxy-3,4-epoxibutoxy)-benzol und 1,4-Bis-(2-hydroxy-4,5-epoxipentoxy)-benzol.

Zu weiteren Beispielen gehören die mit einem halogenhaltigen Epoxid oder Dihalohydrin in Gegenwart eines alkalischen Mediums erhältlichen Epoxipolyäther mehrwertiger Phenole, wofür unter anderem Resorcin, Brenzkatechin, Hydrochinon, Methylresorcin oder mehrkernige Phenole wie 2,2-Bis-(4-hydroxyphenyl)-propan (Bisphenol A), 2,2-Bis-(4-hydroxyphenyl)-butan, 4,4'-Dihydroxybenzophenon, Bis-(4-hydroxyphenyl)-äthan, 2,2-Bis-(4-hydroxyphenyl)-pentan und 1,5-Dihydroxynaphthalin in Frage kommen. Weitere Beispiele für halogenhaltige Epoxide sind 3-Chlor-1,2-epoxybutan, 3-Brom-1,2-epoxihexan und 3-Chlor-1,2-epoxioctan. Durch Aenderung der Phenol/Epichlorhydrinverhältnisse erhält man Produkte verschiedenen Molekulargewichts, wie in US-A-2 633 458 angegeben.

Die Glycidylpolyäther zweiwertiger Phenole stellen eine bevorzugte Gruppe der oben beschriebenen Epoxipolyäther mehrwertiger Phenole dar. Diese lassen sich durch Umsetzung des zweiwertigen Phenols und Epichlorhydrin im erforderlichen Verhältnis in einem alkalischen Medium herstellen. Die gewünschte Alkalität erhält man durch Zusatz basischer Substanzen wie Natrium- oder Kaliumhydroxyd, vorzugsweise in stöchiometrischem Ueberschuss über das Epichlorhydrin. Die Umsetzung erfolgt vorzugsweise bei Temperaturen im Bereich von 50 °C bis 150 °C. Das Erhitzen wird mehrere Stunden lang fortgesetzt, um die Reaktion zu bewirken, und das Produkt wird dann salz- und basenfrei gewaschen.

Die Herstellung von vier geeigneten Glycidylpolyäthern zweiwertiger Phenole als Polyäther A, B, C, und D wird in US-A-2 633 458 erläutert.

Eine weitere Gruppe Polyepoxide besteht aus den Polyepoxypolyäthern, die man durch Umsetzung der oben beschriebenen halogenhaltigen Epoxide wie Epichlorhydrin mit einem mehrwertigen Alkohol, vorzugsweise in Gegenwart einer sauer wirkenden Verbindung wie Salzsäure, und nachfolgende Behandlung des entstandenen Produkts mit einer alkalischen Komponente erhält. Dabei ist der Ausdruck « mehrwertiger Alkohol » so zu verstehen, dass er solche Verbindungen einschliesst, die mindestens zwei freie alkoholische OH-Gruppen enthalten, und umfasst mehrwertige Alkohole und deren Aether und Ester, Hydroxyaldehyde, Hydroxyketone und halogenierte mehrwertige Alkohole. Dafür verwendbare mehrwertige Alkohole sind zum Beispiel Glycerin, Propylenglykol, Aethylenglykol, Diäthylenglykol, Butylenglykol, Hexantriol, Sorbit, Mannit, Pentaerythrit, Polyallylalkohol, Polyvinylalkohol, Mesitol, Trimethylolpropan und 2,2-Bis-(4-hydroxycyclohexyl)-propan.

Die Herstellung geeigneter Polyepoxidpolyäther wird in US-A-2 633 458 als Polyäther F erläutert.

Besonders bevorzugte Mitglieder dieser Gruppe umfassen die Glycidylpolyäther aliphatischer mehrwertiger Alkohole mit 2 bis 10 Kohlenstoffatomen und 2 bis 6 Hydroxylgruppen sowie besonders bevorzugt die Alkanpolyole mit 2 bis 8 Kohlenstoffatomen und 2 bis 6 Hydroxylgruppen. Derartige Produkte besitzen vorzugsweise eine Epoxifunktionalität über 1,0 und besonders bevorzugt zwischen 1,1 und 4 sowie ein Molekulargewicht zwischen 300 und 1 000.

Zu einer weiteren Gruppe von Polyepoxiden gehören die Epoxidester mehrbasischer Säuren wie Diglycidylphthalat, Diglycidyladipat, Diglycidyltetrahydrophthalat, Diglycidylmaleinat, epoxidiertes Dimethylallylphthalat und epoxidiertes Dicrotylphthalat.

Beispiele für Polyepoxide mit mittelständigen Epoxidgruppen sind unter anderem die epoxidierten Ester ungesättigter Monocarbonsäuren mit mehreren Aethylendoppelbindungen, wie den epoxidierten Fettsäuren aus Leinöl, Sojabohnen, Perilla, Oiticica, Tungöl, Walnussöl und dehydratisiertem Rizinusöl, Methyllinolat, Butyllinolat, Aethyl-9,12-octadecadienoat, Butyl-9,12,15-octadecatrienoat, Aethyleläostearat, Monoglyceride von Tungöl-, Sojabohnenöl-, Sonnenblumen-, Raps-, Hanfsamen-, Sardinen- und Baumwollsamenölfettsäuren.

Zu einer weiteren Gruppe epoxihaltiger Stoffe mit mittelständigen Epoxidgruppen gehören die epoxidierten Ester aus ungesättigten Alkoholen mit mittelständiger Aethylengruppe und Polycarbonsäuren, wie zum Beispiel Di-(2,3-epoxibutyl)-adipat, Di-(2,3-epoxibutyl)-oxalat, Di-(2,3-epoxihexyl)-succinat, Di-(2,3-epoxioctyl)-tetrahydrophthalat, Di-(4,5-epoxidodecyl)-maleinat, Di-(2,3-epoxibutyl)-terephthalat, Di-(2,3-epoxipentyl)-thiopropionat, Di-(2,3-epoxibutyl)-citrat und Di-(4,5-epoxioctadecyl)-malonat, sowie die Ester von Epoxicyclohexanol und Epoxicyclohexylalkanolen, wie zum Beispiel Di-(2,3-epoxicyclohexylmethyl)-adipat und Di-(2,3-epoxicyclohexylmethyl)-phthalat.

Eine weitere Gruppe von Stoffen mit mittelständigen Epoxidgruppen umfasst epoxidierte Ester ungesättigter Alkohole mit ungesättigten Carbonsäuren, wie 2,3-Epoxibutyl-3,4-epoxioentanoat, 3,4-Epoxihexyl-3,4-epoxypentanoat, 3,4-Epoxicyclohexyl-2,3-epoxicyclohexanoat, 2,3-Epoxicyclohexylmethyl-2,3-epoxicyclohexanoat und 3,4-Epoxicyclohexyl-4,5-epoxioctanoat.

Zu einer weiteren Gruppe von Stoffen mit mittelständigen Epoxidgruppen zählen epoxidierte Ester ungesättigter Monocarbonsäuren mit mehrwertigen Alkoholen, wie Aethylenglykol-di-(2,3-epoxicyclohexanoat), Glycerin-tri-(2,3-epoxicyclohexanoat) und Pentandiol-di-(2,3-epoxioctanoat).

Noch eine weitere Gruppe Epoxidverbindungen mit mittelständigen Epoxidgruppen umfasst epoxidierte Derivate ungesättigter Polycarbonsäuren mit mehreren Aethylenbindungen, wie zum Beispiel

Dimethyl-8,9,11,13-diepoxieikosandioat, Dibutyl-7,8,11,12-diepoxioctadecandioat, Dioctyl-10,11-diäthyl-8,9,12,13-diepoxieikosandioat, Dicyclohexyl-3,4,5,6-diepoxicyclohexandicarboxylat, Dibenzyl-1,2,4,5-diepoxicyclohexan-1,2-dicarboxylat und Diäthyl-5,6,10,11-diepoxioctadecylsuccinat.

Bei dem erfindungsgemässen Verfahren liegt der verwendete Katalysatoranteil vorzugsweise zwischen 0,01 und 0,5 Gew.-%, bezogen auf das Gesamtgewicht der Reaktionspartner.

Das erfindungsgemässe Verfahren lässt sich in der Schmelze oder in Gegenwart eines Lösungsmittels durchführen. Wenn feste oder hochviskose Reaktionspartner eingesetzt und/oder hochviskose Produkte gebildet werden, kann die Gegenwart inerter Lösungsmittel vorteilhaft sein. Als inerte Lösungsmittel kommen beispielsweise Xylol, Toluol, Methylisobutylketon, Aethylenglykoldiäthyläther und -dibutyläther in Betracht.

Die erfindungsgemässen neuartigen Katalysatoren Formylmethylentriphenylphosphoran und Formylmethyltriphenylphosphoniumchlorid sind Handelsartikel.

Die nachfolgenden Beispiele dienen der näheren Erläuterung der Art der vorliegenden Erfindung, doch sind diese nicht so auszulegen, als dass sie deren Umfang einschränken würden.

## Beispiel 1

500 g 2,2-Bis-[p-(glycidyloxy)-phenyl]-propan, ARALDITE 6010®, der handelsübliche Diglycidyläther von Bisphenol A mit Epoxigehalt 0,531 val/100 g, 267,5 g 4,4'-Isopropylidendiphenol (Bisphenol A) und 0,5 g (1 000 ppm, bezogen auf flüssiges Epoxidharz) Formylmethylentriphenylphosphoran $(C_6H_5)_3P = CHCHO$ werden in einen mit mechanischem Rührer, Stickstoffeinlassrohr, Thermometer und Rückflusskühler ausgerüsteten 1-Liter-Dreihalsrundkolben gegeben und gründlich vermischt.

Das Reaktionsgemisch wird gerührt und unter Stickstoff auf 130 °C erhitzt. Die äussere Wärmequelle wird dann abgestellt, und es erfolgt eine exotherme Reaktion, welche die Temperatur auf eine Spitze von etwa 190 °C steigert.

Dann hält man das Reaktionsgemisch unter Rühren 1,5 Stunden lang bei 195 °C. Das entstandene vorverlängerte Harz besitzt einen Epoxidgehalt von 0,040 val/100 g und eine Gardner-Holdt-Viskosität von 0,36 $mm^2/s$ bei 25 °C.

Dieses vorverlängerte Harz erhitzt man dann weitere 2 Stunden im Ofen bei 195 °C. Danach weist das Harz einen Epoxidgehalt von 0,039 val/100 g und eine Gardner-Holdt-Viskosität von 0,36-0,47 $mm^2/s$ auf.

Die berechnete Epoxidgehaltzahl für dieses vorverlängerte Harz beträgt 0,040 val/100 g.

Eine Epoxidzahl über 0,040 val/100 g bedeutet unvollständige Vorverlängerung, und eine Zahl unter 0,040 val/100 g deutet an, dass die vorhandenen sekundären Hydroxylgruppen an einer Folgereaktion mit den Epoxidgruppen teilnehmen und dass Verzweigung anläuft.

## Beispiel 2

Man wiederholt die allgemeine Arbeitsweise des Beispiels 1, ausser dass 0,5 g (1 000 ppm, bezogen auf Epoxidharz) Formylmethyltriphenylphosphoniumchlorid anstelle von Formylmethylentriphenylphosphoran als Vorverlängerungskatalysator eingesetzt werden. Die exotherme Reaktion ergibt eine Temperatur von 175 °C.

Das Reaktionsgemisch wird dann unter Rühren 1 Stunde bei 195 °C gehalten. Das entstandene vorverlängerte Harz besitzt einen Epoxidgehalt von 0,040 val/100 g und eine Gardner-Holdt-Viskosität von 0,36 $mm^2/s$ bei 25 °C.

Das vorverlängerte Harz wird dann weitere 2 Stunden im Ofen bei 195 °C erhitzt. Nach dieser Erhitzungszeit besitzt das Harz immer noch einen Epoxidgehalt von 0,040 val/100 g sowie eine Gardner-Holdt-Viskosität von 0,36 $mm^2/s$ bei 25 °C.

Die von den vorverlängerten Harzen aus Beispielen 1 und 2 gezeigten Eigenschaften belegen die hohe Selektivität der vorliegenden Katalysatoren in der Herstellung vorverlängerter Harze mit guter Stabilität bei 195 °C. Die Epoxidgehaltszahl bleibt nach 2 Stunden Erhitzen auf 195 °C im wesentlichen konstant, mit einer nur geringfügigen Viskositätszunahme wie nach der Gardner-Holdt-Methode gemessen.

## Beispiele 3-11

Man verfährt allgemein wie in Beispiel 1 mit demselben flüssigen Epoxidharz, jedoch mit verschiedenen Phosphoran- oder Phosphoniumhalogenidkatalysatoren. Die Ergebnisse dieser Vorverlängerungsreaktionen sind in Tabelle A angegeben.

(Siehe Tabelle A Seite 6 f.)

Tabelle A

| Bsp. | Katalysator | Anfängliches Erhitzen auf °C | exotherme Spitze °C | Stunden Erhitzen bei 195°C | Epoxidgehalt des vor verlängerten Harzes val 100 g: nach der Vorverlängerung | Epoxidgehalt des vor verlängerten Harzes val 100 g: nach Erhitzen im Ofen | Gardner-Holdt-Viskosität bei 25°C $mm^2/s$: nach der Vorverlängerung | Gardner-Holdt-Viskosität bei 25°C $mm^2/s$: Nach Erhitzen im Ofen |
|---|---|---|---|---|---|---|---|---|
| 1 | $(C_6H_5)_3P{=}CHCHO$ | 130 | 190 | 1,5 | 0,040 | 0,039 | 0,36 | 0,36-0,47 |
| 2 | $(C_6H_5)_3P^+CH_2CHOCl^-$ | 130 | 175 | 1 | 0,040 | 0,040 | 0,36 | 0,36 |
| 3 | $(C_6H_5)_3P{=}CHCOC_6H_5$ | 130 | 163 | 3 | 0,040 | 0,039 | 0,36-0,47 | 0,68 |
| 4 | $(C_6H_5)_3P{=}CHCOCH_3$ | 135 | 195 | 4 | 0,038 | 0,038 | 0,36-0,47 | 0,36-0,47 |
| 5 | $(C_6H_5)_3P^+CH_2COC_6H_5Br^-$ [b] | 195 | keine | 3 | 0,038 | 0,029[c] | 0,47-0,68 | 1,5-3,8[c] |
| 6 | $(C_6H_5)_3P^+CH_2COOCH_3Br^-$ | 180 | 191 | 2 1/4 | 0,043 | 0,042 | 0,3-0,36[d] | 0,36-0,47 |
| 7 | $(C_6H_5)_3P{=}CHCOOC_2H_5$ | 195 | keine | 2 | 0,039 | 0,037[c] | 0,47 | 0,92-1,5[c] |
| 8 | $(C_6H_5)_3P{=}CHCOOCH_3$ | 160 | 180 | 1,5 | 0,040 | 0,032 | 0,68-0,92 | 0,92-1,5[c] |
| 9 | $(C_6H_5)_3P^+CH_2COOC_2H_5Br^-$ | 195 | keine | 4,5 | 0,046 | - | 0,47 | - |
| 10 | $(C_6H_5)_3P^+C_2H_5I^-$ | 130 | 181 | 2/3 | 0,039 | 0,037 | 0,36-0,47 | 0,36-0,47 |
| 11 | $(C_6H_5)_3P^+C_2H_5OAC^- \cdot HOAC$ | 127 | 197 | 1,5 | 0,040 | 0,040 | 0,36 | 0,36 |

a. Die Katalysatoren sind :
Beispiel 1 : Formylmethylentriphenylphosphoran
Beispiel 2 : Formylmethyltriphenylphosphoniumchlorid
Beispiel 3 : Benzoylmethylentriphenylphosphoran
Beispiel 4 : Acetylmethylentriphenylphosphoran
Beispiel 5 : Phenacyltriphenylphosphoniumbromid
Beispiel 6 : Methoxycarbonylmethylphosphoniumbromid
Beispiel 7 : Aethyl-triphenylphosphoranylidenacetat
Beispiel 8 : Methyl-triphenylphosphoranylidenacetat
Beispiel 9 : Aethoxycarbonylmethyltriphenylphosphoniumbromid
Beispiel 10 : Aethyltriphenylphosphoniumjodid
Beispiel 11 : Aethyltriphenylphosphoniumacetat/Essigsäurekomplex
b. Nur 200 ppm Katalysator werden eingesetzt.
c. Die Gardner-Holdt-Viskositätswerte für diese vorverlängerten, 2 Stunden im Ofen bei 195 °C erhitzten Harze sind übermässig hoch, was den Beginn einer gewissen Verzweigung anzeigt. Die Epoxidgehaltszahlen liegen ebenfalls unterhalb des erwünschten Bereichs von 0,038-0,040 für dieses vorverlängerte Harz.
d. Die Gardner-Holt-Viskositätswerte und die entsprechend hohe Epoxidgehaltzahl von 0,043 val/100 g deuten darauf hin, dass die Vorverlängerungsreaktion unvollständig ist.

Eine Uebersicht der in Tabelle A angegebenen Daten bestätigt die Ueberlegenheit des vorliegenden Formylmethylentriphenylphosphorans und Formylmethyltriphenylphosphoniumchlorids als Vorverlängerungskatalysatoren für Epoxidharze gegenüber den verschiedenen, im Hinblick auf rasche Vorverlängerungsreaktion und hohe Selektivität untersuchten Phosphoranen und Phosphoniumsalzen des Standes der Technik.

Diese Eigenschaften zeigen sich oben in Beispielen 1 und 2, wo es ersichtlich ist, dass eine rasche Vorverlängerungsreaktion (etwa zwei Stunden oder weniger) stattfindet und dabei ein vorverlängertes Harz mit guter Stabilität bei 195 °C liefert, was auf hohe Selektivität deutet. Die vorverlängerten Harze sind hochmolekulare Feststoffe (Harze vom sogenannten « 9 »-Typ), die durch endständige Epoxidgehalte von vorzugsweise 0,038-0,040 val/100 g und Gardner-Holdt-Viskositäten von 0,36-0,92 $mm^2/s$ (vorzugsweise 0,36-0,68 $mm^2/s$) bei 25 °C gekennzeichnet sind.

Ein Epoxidgehalt von 0,040/100 g ist der theoretische Wert für die untersuchten Harze vom « 9 »-Typ.

Beispiele 3 und 4 zeigen die Eigenschaften von Epoxidharzen, die durch Katalyse mit Benzoylmethylentriphenylphosphoran und Acetylmethylentriphenylphosphoran, die speziell in der britischen Patentschrift Nr. 1 398 197 offenbart sind, erhalten werden.

Ein Vergleich zwischen den mit den eben erwähnten Phosphoranen und Formylmethylentriphenylphosphoran erhaltenen Daten untermauert die Ueberlegenheit des letzteren bei der Katalyse der Epoxidharzvorverlängerung.

Das Exothermprofil und die rasche Reaktion mit Formylmethylentriphenylphosphoran sind ebenso offensichtlich wie die gute Selektivität, gemessen an der relativen Stabilität des Epoxidgehalts, und die Viskosität der im Ofen gealterten Probe des vorverlängerten Harzes.

Dagegen sind die mit den benzoyl- und acetylsubstituierten Phosphoranen erhaltenen Reaktionszeiten zweimal bis fast dreimal länger (bis 4 Stunden), obwohl die Selektivitäten mit Formylmethylentriphenylphosphoran vergleichbar sind.

In der britischen Patentschrift Nr. 1 398 197 ist angegeben, dass die dort offenbarten Phosphorane wirksame Katalysatoren zur Vorverlängerung von Epoxidharzen sind, doch werden dabei Reaktionszeiten von 4-6 Stunden bei 170 °C für vorverlängerte Harze vorgeschrieben, die im allgemeinen Endepoxidgehalte von 0,2-0,3 val/100 g und Viskositäten (Gardner-Holdt) von 80-800 mPa s bei 25 °C aufweisen. Solche Viskositäten sind für niedermolekulare Epoxidharze charakteristisch. Beispiele 5 und 6 geben die durch Katalyse der Epoxidharzvorverlängerung mit Phenacyltriphenylphosphoniumbromid und Methoxycarbonylmethylphosphoniumbromid erhaltenen Daten.

Ein Vergleich der Daten bestätigt den unerwarteten Befund, dass das Phosphoniumhalogenidsalz auf Grundlage des formylsubstituierten Kohlenwasserstoffteils analogen Verbindungen mit Phenacyl- und Acetylsubstitution eines Kohlenwasserstoffrests bei der Funktion als wirksamer Katalysator für Epoxidharzvorverlängerung überlegen ist. Dies zeigt sich in den Reaktionszeiten bei 195 °C und der Veränderung der Harzviskositäten beim Erhitzen der entsprechenden Proben bei erhöhter Temperatur (195 °C) über den theoretischen Endepoxidgehalt des vorverlängerten Harzes hinaus.

Die erfindungsgemässen Katalysatoren liefern somit überlegene Systeme zur Umwandlung mehr als eine 1,2-Epoxidgruppe enthaltender, flüssiger Epoxidharze in feste, höhermolekulare Polyhydroxyäther.

Beispiele 7-9 legen dar, dass diese Phosphoran- und Phosphoniumbromidkatalysatoren als Vorverlängerungskatalysatoren für Epoxidharz vom « 9 »-Typ wegen schlechter Selektivität und/oder übermässig niedriger Reaktionsgeschwindigkeit unwirksam sind.

Beispiele 10-11 zeigen, dass diese beiden Katalysatoren des Standes der Technik der vorliegenden Katalysatoren bezüglich Selektivität und Reaktionsfähigkeit bei der Vorverlängerung eines flüssigen Epoxidharzes unter diesen Reaktionsbedingungen weitgehend gleichkommen.

Beispiele 12-15

Ein aliquoter Teil einer gut vermischten, vorkatalysierten, aus (a) 1 000 g 2,2-Bis-[p-(glycidyloxy)-phenyl]-propan und (b) 1,0 g Katalysator bestehenden Zusammensetzung wird fünf Wochen bei 50 °C in einem zugeschmolzenen Behälter gelagert. Nach Ablauf dieser Zeit werden der Epoxidgehalt und die Viskositätswerte an jeder Probe bestimmt, um die Indifferenz des Vorverlängerungskatalysators gegen vorzeitige Vorverlängerung des Epoxidharzes unter Lagerbedingungen bei 50 °C darzulegen. Die Daten sind unten in der Tabelle angegeben.

Lagerfähigkeit von vorkatalysiertem flüssigen Epoxidharz bei 50°C[a]

| Beispiel | 12 | 13 | 14 | 15 |
|---|---|---|---|---|
| Katalysator[b] | A | B | C | D |
| Epoxidzahl val/100 g | | | | |
| am Anfang | 0,522 | 0,523 | 0,521 | 0,521 |
| nach 5 Wochen Lagerung bei 50°C | 0,518 | 0,056 | 0,512 | 0,518 |
| Viskosität (mPa s) bei 25°C | | | | |
| am Anfang | 15 527 | 15 026 | 15 986 | 15 280 |
| nach 5 Wochen Lagerung bei 50°C | 21 328 | 35 478 | 27 904 | 27 944 |

a. 2,2-Bis-[p-(glycidyloxy)-phenyl]-propan, ARALDITE 6 010® als flüssiges Harz.
b. Die Katalysatoren sind :
A. Aethyltriphenylphosphoniumjodid
B. Aethyltriphenylphosphoniumacetat/Essigsäurekomplex
C. Formylmethyltriphenylphosphoniumchlorid
D. Formylmethylentriphenylphosphoran.

Die vorliegenden Katalysatoren in Beispielen 14-15 liefern viel bessere Lagerfähigkeit als der Katalysator aus Beispiel 13. Der Katalysator aus Beispiel 12 ergibt die stabilsten vorkatalysierten Lösungen.

Beispiel 16-21

Unter Reaktionsbedinungen, wo die Vorverlängerungsreaktion bei mässigen Temperaturen (etwa 130 °C) eingeleitet wird, und wo die Grösse (Volumen) der sich erhitzenden Masse klein genug war, um ein Ansteigen der exothermen Temperatur auf über 195-200 °C zu verhindern, zeigen die vorliegenden Katalysatoren aus Beispielen 1 und 2 sowie die vorbekannten Katalysatoren aus Beispielen 10 und 11 sämtlich im wesentlichen gleiches Verhalten bezüglich Selektivität und Reaktionsfähigkeit bei der Vorverlängerung eines flüssigen Epoxidharzes.

Wird jedoch die Vorverlängerungsreaktion bei höherer Temperatur (150 °C) eingeleitet, oder ist die Grösse (Volumen) der sich erhitzenden Masse gross genug, um die Temperaturspitze 195-200 °C übersteigen zu lassen, so ist die vorliegende Verbindung aus Beispiel 2 überraschenderweise wirksamer als Katalysator für die Vorverlängerungsreaktion als die beiden Verbindungen des Standes der Technik aus Beispiel 10 oder 11. Anscheinend entaktivieren die höheren Temperaturen (über 200 °C) diese Verbindungen des Standes der Technik, was deren Reaktionsfähigkeit und/oder Selektivität als Katalysatoren bei der Vorverlängerung eines flüssigen Epoxidharzes erheblich vermindert.

Wird die Grösse des Ansatzes nach Beispiel 1 verdoppelt, wie bei der unten angegebenen Arbeitsweise, so erhält man die folgenden Ergebnisse :

Man gibt 1 000 g 2,2-Bis-[p-(glycidyloxy)-phenyl]-propan, ARALDITE 6010®, der handelsübliche Diglycidyläther von Bisphenol A, mit Epoxidgehalt 0,531 val/100 g, 534 g 4,4'-Isopropylidendiphenol (Bisphenol A) und 1,0 g (1 000 ppm, bezogen auf flüssiges Epoxidharz) als Katalysator in einen mit Rüher, Thermometer und Stickstoffeinlass ausgerüsteten 2-Liter-Dreihalsrundkolben. Unter Stickstoff erhitzt man das Reaktionsgemisch auf 130 °C unter Rühren. Dann stellt man die äussere Wärmequelle ab und

lässt das Reaktionsgemisch sich exotherm erhitzen. Nach Abklingen der exothermen Spitze wird die Temperatur des Reaktionsgemischs auf 195 °C eingestellt und dort gehalten. Danach nimmt man in Abständen von 1 Stunde Proben des Reaktionsgemischs, um den Verlauf der Vorverlängerungsreaktion über einen Zeitraum von 4 Stunden zu verfolgen. Die dabei erhaltenen Ergebnisse sind unten in der Tabelle angegeben.

| Beispiel[a] | Exothermes Maximum °C | Stunden Reaktionszeit | Epoxidgehalt[b] des Reaktionsgemischs in val/100 g |
|---|---|---|---|
| 16 | 198 | 1 | 0,046 |
| | | 2 | 0,044 |
| | | 3 | 0.042 |
| | | 4 | 0,039 |
| 17 | 230 | 1 | 0,058 |
| | | 2 | 0,055 |
| | | 3 | 0,052 |
| | | 4 | 0,050 |
| 18 | 212 | 1 | 0,046 |
| | | 2 | 0,045 |
| | | 3 | 0,039 |
| | | 4 | 0,037 |

a. Der Katalysator ist
16. Formylmethyltriphenylphosphoniumchlorid
17. Aethyltriphenylphosphoniumjodid
18. Aethyltriphenylphosphoniumacetat/Essigsäurekomplex
b. Der berechnete Endepoxidgehalt soll 0,040 val/100 g betragen.

Beispiele 16-18 zeigen, dass Aethyltriphenylphosphoniumjodid bei hoher Temperatur stark entaktiviert wird, dass der Aethyltriphenylphosphoniumacetat/Essigsäurekomplex bei diesen Reaktionsbedingungen einem Verlust an Selektivität unterliegt, wobei der Epoxidgehalt eventuell eine gewisse Verzweigung anzeigt, und dass der vorliegende Katalysator aus Beispiel 16 einer Entaktivierung widersteht und immer noch die sehr erwünschten, ausgewogenen katalytischen Eigenschaften aufweist, die keine der Verbindungen des Standes der Technik besitzt.

Bei Verwendung derselben drei Katalysatoren und genau derselben Arbeitsweise wie für Beispiele 16-18 angegeben, ausser dass die Reaktionsgemische jeweils zur Einleitung der Vorverlängerungsreaktion auf 150 °C erhitzt werden, erhält man die folgenden Ergebnisse, wenn die Reaktionsgemische wie für Beispiele 16-18 beschrieben verfolgt werden.

| Beispiel[a] | Exothermes Maximum °C | Stunden Reaktionszeit | Epoxidgehalt[b] des Reaktionsgemischs in val/100 g |
|---|---|---|---|
| 19 | 209 | 1 | 0,042 |
| | | 2 | 0,040 |
| | | 3 | 0,040 |
| | | 4 | 0,040 |
| 20 | 210 | 1 | 0,048 |
| | | 2 | 0,045 |
| | | 3 | 0,043 |
| | | 4 | 0,041 |

(Fortsetzung)

| Beispiel[a] | Exothermes Maximum °C | Stunden Reaktionszeit | Epoxidgehalt[b] des Reaktionsgemischs in val/100 g |
|---|---|---|---|
| 21 | 225 | 1 | 0,054 |
| | | 2 | 0,053 |
| | | 3 | 0,053 |
| | | 4 | 0,048 |

a. Der Katalysator ist
19. Formylmethyltriphenylphosphoniumchlorid
20. Aethyltriphenylphosphoniumjodid
21. Aethyltriphenylphosphoniumacetat/Essigsäurekomplex
b. Der berechnete Endepoxidgehalt soll 0,040 val/100 g betragen.

In den Ergebnissen von Beispielen 19-21 unterscheidet sich die vorliegende Verbindung aus Beispiel 19 noch dramatischer von den beiden Verbindungen des Standes der Technik aus Beispielen 20 und 21 als Vorverlängerungskatalysatoren für flüssige Epoxidharze. Beispiel 21 zeigt, dass der Aethyltriphenylphosphoniumacetat/Essigsäurekomplex bei hoher Temperatur besonders stark entaktiviert wird und unter den Bedingungen von Beispiel 21 beschränkte katalytische Wirkungen aufweist. Beispiel 20 zeigt, dass Aethyltriphenylphosphoniumjodid nach Entaktivierung durch Aussetzung zu einer exothermen Temperaturspitze von nur 210 °C ein viel schwächerer Katalysator ist. Obwohl er sogar nach vier Stunden Reaktionszeit noch eine katalytische Aktivität zeigt, führt er nicht zu einer vollständigen Vorverlängerung des flüssigen Epoxiharzes.

Beispiel 19 legt dar, dass die vorliegende Verbindung Formylmethyltriphenylphosphoniumchlorid sowohl bezüglich Reaktionsfähigkeit als auch Selektivität sogar nach Aussetzung zu einer exothermen Temperaturspitze von 209 °C ein ausgezeichneter Katalysator ist. Vollständige und selektive Vorverlängerung des flüssigen Epoxidharzes wird in nur zwei Stunden erreicht.

Die Anwendung der vorliegenden Katalysatoren, insbesondere bei diesen höheren Anfangsreaktionstemperaturen (etwa 150 °C) würde offensichtlich zu begleitenden wirtschaftlichen Vorteilen führen, die bei der Verwendung der Katalysatoren des Standes der Technik zur Zeit nicht erhältlich sind. Die Verwendung der vorliegenden neuen Katalysatoren ermöglicht nun viel kürzere Vorverlängerungsreaktionszeiten.

**Patentansprüche**

1. Vorkatalysierte Epoxidharzzusammensetzungen, dadurch gekennzeichnet, dass sie aus
(a) einem flüssigen Epoxidharz mit durchschnittlich mehr als einer vicinalen Epoxidgruppe pro Molekül und
(b) 0,005 bis 1 Gew.%, bezogen auf das Gesamtgewicht der Reaktionspartner, von Formylmethylentriphenylphosphoran oder einem Formylmethyltriphenylphosphoniumhalogenid bestehen.

2. Zusammensetzungen nach Anspruch 1, dadurch gekennzeichnet, dass als Komponente (b) Formylmethylentriphenylphosphoran oder Formylmethyltriphenylphosphoniumchlorid vorliegt.

3. Zusammensetzungen nach Anspruch 1, dadurch gekennzeichnet, dass sie zusätzlich (c) ein Bisphenol enthalten, wobei (b) in ausreichender Menge vorliegt, um die Vorverlängerungsreaktion zwischen (a) und (c) zu katalysieren, wenn das Reaktionsgemisch auf eine Temperatur von 50 °C bis 225 °C erhitzt wird.

4. Zusammensetzungen nach Anspruch 1, dadurch gekennzeichnet, dass als (a) 4,4'-Isopropylidendiphenoldiglycidyläther vorliegt.

5. Zusammensetzungen nach Anspruch 3, dadurch gekennzeichnet, dass als (c) 4,4'-Isopropylidendiphenol vorliegt.

6. Verfahren zur Vorverlängerung eines flüssigen Epoxidharzes mit mindestens einer vicinalen Epoxidgruppe mittels eines Polyphenols unter Bildung eines festen, im wesentlichen linearen Harzes bei 50 °C bis 225 °C, dadurch gekennzeichnet, dass die Vorverlängerungsreaktion in Gegenwart von 0,005 bis 1 Gew.%, bezogen auf das Gesamtgewicht der Reaktionspartner, Formylmethylentriphenylphosphoran oder einem Formylmethyltriphenylphosphoniumhalogenid erfolgt.

7. Verfahren nach Anspruch 6, dadurch gekennzeichnet, dass als Halogenid Formylmethyltriphenylphosphoniumchlorid vorliegt.

8. Verfahren nach Anspruch 6, dadurch gekennzeichnet, dass als Epoxidharz 2,2-Bis-[p-(glycidyloxy)-phenyl]-propan und als Bisphenol 4,4'-Isopropylidendiphenol vorliegt.

**Claims**

1. A precatalyzed epoxy resin composition which comprises
(a) a liquid epoxy resin bearing an average of more than one vicinal epoxy group per molecule, and
(b) 0.005 to 1 % by weight, based on the total weight of the reactants, of formylmethylenetriphenylphosphorane or a formylmethyltriphenylphosphonium halide.

2. A composition according to claim 1 wherein component (b) is formylmethylenetriphenylphosphorane or formylmethyltriphenylphosphonium chloride.

3. A composition according to claim 1 which additionally comprises (c) a bisphenol, with (b) being present in an amount sufficient to catalyze the advancement reaction between (a) and (c) when the reaction mixture is heated to a temperature in the range from about 50 °C to about 225 °C.

4. A composition according to claim 1 wherein (a) is the diglycidyl ether of 4,4'-isopropylidenediphenol.

5. A composition according to claim 3 wherein (c) is 4,4'-isopropylidenendiphenol.

6. A process for advancing a liquid epoxy resin bearing at least one vicinal epoxy group with a polyphenol to form a solid, essentially linear resin in the temperature range from 50 °C to 225 °C, which process comprises carrying out the advancement reaction in the presence of 0.005 to 1 % by weight, based on the total weight of the reactants, of formalmethylenetriphenylphosphorane or a formylmethyltriphenylphosphonium halide.

7. A process according to claim 6, wherein the halide is formylmethyltriphenylphosphonium chloride.

8. A process according to claim 6 wherein the epoxy resin is 2,2-bis [p-(glycidyloxy) phenyl] propane and the bisphenol is 4,4'-isopropylidenediphenol.

**Revendications**

1. Compositions de résines époxydiques précatalysées, caractérisées en ce qu'elles sont constituées :
(a) d'une résine époxydique liquide contenant en moyenne plus d'un radical époxy vicinal par molécule et
(b) d'un pourcentage pondéral de 0,005 à 1 %, par rapport à la masse totale de tous les corps participant à la réaction, de formylméthylènetriphénylphosphorane ou d'un halogénure de formylméthyltriphénylphosphonium.

2. Compositions selon la revendication 1, caractérisées en ce que le composant (b) est le formylméthylènetriphénylphosphorane ou le chlorure de formylméthyltriphénylphosphonium.

3. Compositions selon la revendication 1, caractérisées en ce qu'elles contiennent de plus un bisphénol (c) et dans lesquelles (b) est en quantité suffisante pour catalyser la réaction de préallongement entre (a) et (c) quand on chauffe le mélange réactionnel d'une température de 50 °C à 225 °C.

4. Compositions selon la revendication 1, caractérisées en ce que (a) est l'éther diglycidylique de l'isopropylidène-4,4' diphénol.

5. Compositions selon la revendication 3, caractérisées en ce (c) est l'isopropylidène-4,4' diphénol.

6. Procédé de préallongement au moyen d'un polyphénol d'une résine époxydique liquide comportant au moins un groupe époxy vicinal, procédé qui produit une résine solide pratiquement linéaire entre environ 50 et 225 °C, caractérisé en ce que la réaction de préallongement est effectué en présence d'un pourcentage pondéral de 0,005 à 1 %, par rapport au poids total des corps participant à la réaction, de formylméthylènetriphénylphosphorane ou d'un halogénure de formylméthyltriphénylphosphonium.

7. Procédé selon la revendication 6, caractérisé en ce que l'halogénure est le chlorure de formylméthyltriphénylphosphonium.

8. Procédé selon la revendication 6, caractérisé en ce que la résine époxydique est le bis-[p-(glycidyloxy)-phényl]-2,2 propane et que le bisphénol est l'isopropylidène-4,4' diphénol.